# EUROPÄISCHE PATENTSCHRIFT

(11) **EP 4 463 786 B1**
(45) Veröffentlichungstag und Bekanntmachung des Hinweises auf die Patenterteilung: **12.11.2025**
(21) Anmeldenummer: 23713314.5
(22) Anmeldetag: 09.03.2023
(51) Int. Cl.: G06F 21/56, G06F 21/57

(54) **VERFAHREN ZUM SICHEREN BETRIEB EINER SOFTWAREKOMPONENTE**
METHOD FOR SECURELY OPERATING A SOFTWARE COMPONENT
PROCÉDÉ DE FONCTIONNEMENT SÉCURISÉ D'UN COMPOSANT LOGICIEL

(30) Priorität: 25.03.2022 EP 22164407
(43) Veröffentlichungstag der Anmeldung: 20.11.2024
(73) Patentinhaber: Siemens Aktiengesellschaft, 80333 München (DE)
(72) Erfinder: FEIST, Christian Peter, 80689 München (DE); KNIERIM, Christian, 81373 München (DE)
(74) Vertreter: Siemens Patent Attorneys
(86) Internationale Anmeldenummer: PCT/EP2023/056024
(87) Internationale Veröffentlichungsnummer: WO 2023/180083

(56) Entgegenhaltungen:
- CN-A- 109 241 730
- US-A1- 2018 115 585
- US-A1- 2019 005 246
- US-A1- 2020 304 526

## Beschreibung

Die vorliegende Erfindung betrifft ein Verfahren zum sicheren Betreiben einer oder mehrerer Softwarekomponenten, beispielsweise in einem computergesteuerten industriellen Automatisierungssystem. Die Erfindung eignet sich insbesondere im Rahmen einer Continuous Integration/Continuous Delivery (CI/CD) Pipeline.

In vielen Fällen erfolgt eine Aktualisierung von Softwarekomponenten über ein Deployment von Softwarecontainern. Es können bei der Aktualisierung in den veränderten Softwarekomponenten Schwachstellen auftreten, die als Sicherheitslücken behandelt werden müssen.

Container-Images bzw. auf einer Laufzeitumgebung davon abgeleitete Container-Instanzen, aber auch Betriebssysteme oder Applikationskomponenten können solche Schwachstellen enthalten. In vielen Fällen handelt es sich bei Schwachstellen um fehlerhafte oder fehlende Überprüfungen von Übergabeparametern in Funktionsaufrufen. Diese können von einem Angreifer ausgenutzt werden, indem z.B. speziell präparierte Übergabeparameter an Socketfunktionen oder Funktionsaufrufe im normalen Programmcode durch exponierte Schnittstellen übergeben werden.

Darauf basierende Angriffstechniken, wie Remote Code Execution, SQL-Injection oder das Erlangen privilegierter Berechtigungen ermöglichen Cyber-Security-Attacken die abzuwehren sind.

Werden Schwachstellen erkannt, können diese zum Beispiel in öffentlich erreichbaren Datenbanken z.B. auf Herstellerwebsites oder aggregierten Datenbanken publiziert werden. Gleichzeitig wird beim Hersteller der betroffenen Softwarekomponente meist ein Behebungsprozess eingeleitet, indem z.B. im Programmcode die Parameterüberprüfung angepasst wird und eine neuere Version für die Softwarekomponente bereitgestellt wird.

Diese Vorgehensweise ist Teil des allgemeinen Software-Entwicklungsprozesses. Der Hersteller der jeweiligen Software pflegt jedoch lediglich die von ihm unterstützten Softwarekomponenten. Ältere Versionen werden ab einem vom Hersteller definierten Datum nicht mehr gepflegt. Zudem ist es oft so, dass im Open-Source-Umfeld die Verantwortlichkeiten geteilt sind, sodass einerseits Komponenten, wie Bibliotheken oder Programme, vom Hersteller der Programme gepflegt werden. Andererseits werden die aktualisierten Komponenten anschließend durch einen Distributor paketiert und vorkonfiguriert und durchlaufen einen Release-Prozess. Hierdurch wird das schnelle Beheben kritischer Schwachstellen verzögert.

Es besteht das Risiko, dass entweder nie die schwachstellenbehaftete Softwarekomponente aktualisiert wird oder es erfolgt keine unmittelbare Behebung. Solange die Schwachstelle noch nicht behoben ist, spricht man von Zero-Day-Lücken oder Zero-Day-Exploits.

Es besteht der Wunsch an einer Lösung, welche bekannte, noch nicht durch Patches behobene Schwachstellen in Softwarekomponenten auf einem System oder einer Container-Instanz identifiziert und deren Ausnutzbarkeit zumindest übergangsweise bis zur Bereitstellung eines Fixes behebt. Die Patente US2018115585 und US2021103450 offenbaren relevanten Stand der Technik.

Vor diesem Hintergrund besteht eine Aufgabe der vorliegenden Erfindung darin, einen sicheren Betrieb von Software zu schaffen, insbesondere bei zu aktualisierenden Softwarekomponenten.

Demgemäß wird ein Verfahren zum sicheren Betrieb einer Softwarekomponente vorgeschlagen, mit den Schritten:
Abrufen einer Deploymentinformation für die Softwarekomponente, wobei die Deploymentinformation Informationen über Programmbestandteile der Softwarekomponente und deren Laufzeitkonfiguration umfasst;
Prüfen, ob mindestens ein Programmbestandteil eine Schwachstelle aufweist und Identifizieren des Programmbestandteils;
Bestimmen einer Laufzeiteinschränkung für den mit einer Schwachstelle identifizierten Programmbestandteil;
Einfügen einer Laufzeiteinschränkungsinformation in die Deploymentinformation für die Softwarekomponente; und
Durchführen des Deployments der Softwarekomponente in Abhängigkeit von der Deploymentinformation, wobei die Softwarekomponente bei ihrer Ausführung der Laufzeiteinschränkung gemäß der Laufzeiteinschränkungsinformation unterliegt.

Die Auswertung und insbesondere temporäre Anpassung von Laufzeitkonfigurationsinformationen einer Deployment-Konfiguration zur Schwachstellenbehandlung in zu aktualisierenden Softwarekomponenten erleichtert die Handhabung von Zero-Day-Exploit-Verwundbarkeiten. Dies kann durch eine veränderte Laufzeitkonfiguration für einen als schachstellenbehaftet identifizierten Programmbestandteil sein.

Die Ausführung bzw. der Betrieb der jeweiligen Softwarekomponente erfolgt in einer geeigneten Verarbeitungs- oder Produktionsumgebung.

Eine Schwachstelle umfasst beispielsweise eine Übergabemöglichkeit von ungeprüften Parametern und/oder einen ungewünschten Funktionsaufruf durch die Softwarekomponente. Die Anpassung der Deploymentinformationen beim Erkennen einer Schwachstelle, ermöglicht beispielsweise einen vorübergehenden Privilegienentzug für die Softwarekomponente, sodass ein Schadrisiko reduziert wird.

In Ausführungsformen umfasst die Laufzeiteinschränkung insofern eine Zugriffsrechteeinschränkung und/oder die Beschränkung der Ausgabe von Übergabeparametern an andere Softwarekomponenten oder von Funktionsaufrufen.

Das Verfahren wird vorzugsweise automatisch im Rahmen einer Build-Pipeline, welche beispielsweise Teil einer CI/CD-Pipeline ist, durchgeführt. Das Verfahren wird insbesondere computerimplementiert, etwa durch einen Schwachstellenscanprozess, durchgeführt. Man spricht auch von einem Schwachstellenscanner oder im Weiteren auch kurz: Scanner.

In Ausführungsformen wird ein Schwachstellenscanner in eine CI/CD-Pipeline eingebaut, wobei der Schwachstellenscanner nur nicht die Softwarekomponentenbilder bzw. Softwareimages selbst analysiert, sondern zusätzlich die Deploymentinformation auswertet. In der Deploymentinformation (z.B. Kubernetes yaml-Dateien oder Docker-Compose-Dateien) sind die verwendeten Softwarecontainerimages referenziert, welche die Binärprogramme und Bibliotheken bzw. Libraries enthalten. Die Deploymentinformation enthält ferner Angaben zu deren Laufzeitkonfiguration, wie bestimmte Laufzeiteinschränkungen. Letztere können durch den Schwachstellenscanner analysiert bzw. durchsucht werden, wodurch die von einer Schwachstelle betroffene Softwarekomponente/n identifiziert wird/werden kann/können.

In Ausführungsformen ist die Softwarekomponente als Instanz eines Softwarecontainers implementiert, und ein zugehöriges Softwarecontainerbild umfasst Paketinformationen, Binärdateien, Bibliotheken und Konfigurationsdaten als Programmbestandteile.

In Ausführungsformen umfasst das Deployment die Erstellung eines angepassten Softwarecontainerbildes für die Softwarekomponente nach Maßgabe der um die Laufzeiteinschränkung ergänzte Deploymentinformation.

In Ausführungsformen erfolgt dann vor dem Deployment eine Funktionsprüfung des angepassten Softwarecontainerbildes in einer gesicherten Abarbeitungsumgebung. Beispielsweise veranlasst eine Build-Pipeline die Erzeugung des angepassten Softwarecontainerbildes, und führt mit Hilfe einer Code-Repository Tests an der entsprechenden Softwarekomponente durch.

Das Deployment der Softwarekomponente kann in einer Laufzeitumgebung, wie beispielsweise Docker, erfolgen. Dabei ist ebenfalls denkbar, dass eine Orchestrierung, z.B. mit Hilfe von Kubernetes, von Softwarecontainern erfolgt.

Vorzugsweise referenziert die Deploymentinformation einen oder mehrere Softwarecontainerbilder.

In Ausführungsformen erfolgt das Einfügen einer Laufzeiteinschränkungsinformation über einen Merge-Request für eine Build-Pipeline, welche die Aktualisierung der Softwarekomponente veranlasst.

Der Schwachstellenscanner erzeugt beispielsweise eine Merge-request, welcher von der durch die Code-Repository initiierte Build-Pipeline durchgeführt wird.

In Ausführungsformen umfasst das Prüfen, ob mindestens ein Programmbestandteil eine Schwachstelle aufweist, ein Durchsuchen der Deploymentinformation und/oder einen Scan des Softwarecontainerbildes, beispielsweise in der Art eines Schwachstellenscanners.

In Ausführungsformen umfasst das Verfahren ferner:
Ergänzen der Deploymentinformation um eine Schwachstelleninformation, welche der identifizierten Softwarekomponente und/oder dem mit der Schwachstelle identifizierten Programmbestandteil zugeordnet wird, wobei die Schwachstelleninformation insbesondere das Vorliegen einer Schwachstelle und/oder eine Behebung der Schwachstelle durch die Laufzeiteinschränkung umfasst, und/oder
Speichern der Schwachstelleninformation, welche der identifizierten Softwarekomponente und/oder dem mit der Schwachstelle identifizierten Programmbestandteil zugeordnet ist, in einer Schwachstellendatenbank.

Die Schwachstellendatenbank kann bei erneuten Softwareaktualisierungen abgerufen werden und deren Inhalt für die Konfiguration des Schwachstellenscanners verwendet werden.

In Ausführungsformen umfasst das Verfahren auch die Schritte:
Durchsuchen der Deploymentinformation für die Softwarekomponente nach einer Schwachstelleninformation, welche der Softwarekomponente und/oder dem identifizierten Programmbestandteil zugewiesen ist; und
Durchführen des Deployments der Softwarekomponente in Abhängigkeit von der Schwachstelleninformation.

In Ausführungsformen umfasst das Prüfen, ob mindestens ein Programmbestandteil eine Schwachstelle aufweist, ferner:
Speichern der Schwachstelleninformation als Konfigurationsdaten in einer Schwachstellendatenbank für einen Schwachstellenscanprozess.

Es wird ferner Verfahren zum Betreiben eines Abarbeitungssystems, welches zur Bereitstellung einer oder mehrerer Softwarefunktionen eingerichtet ist, vorgeschlagen, wobei mehrere zusammenwirkende Softwarekomponenten in Laufzeitumgebungen durchgeführt werden. Bei dem Verfahren erfolgt ein Aktualisieren einer der Softwarekomponenten gemäß einem Verfahren wie zuvor oder im Folgenden beschrieben ist.

Die jeweilige Softwarekomponente kann als Instanz in einer Verarbeitungsumgebung, insbesondere als Softwareservice oder Cloudservice und/oder auch hardwaretechnisch implementiert sein. Bei einer softwaretechnischen Implementierung kann die jeweilige Softwarefunktion als Computerprogrammprodukt, als eine Funktion, als eine Routine, als Teil eines Programmcodes oder als ausführbares Objekt ausgebildet sein.

Weiterhin wird ein Computerprogrammprodukt vorgeschlagen, welches Befehle umfasst, die bei der Ausführung des Programms durch einen Computer diesen veranlassen, das vorstehend beschriebene Verfahren auszuführen.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Die vorgeschlagenen Maßnahmen beim Aktualisieren von Software erlauben, dass nicht nur die verwendeten Softwarekomponenten selbst, sondern auch deren in der erfassten Schwachstelleninformation beschriebenen Übergangslösungen auf Anwendung und Ausnutzbarkeit überprüft werden. Daher wird an Flexibilität und Effizient bei der Schwachstellenbehandlung gewonnen.

Die Funktionsfähigkeit der durchgeführten Änderungen an der Softwarekomponente kann mit Hilfe der CI/CD-Pipeline und die in der Pipeline definierten Tests sichergestellt werden.

Es kann ferner die jeweilige Produktionsumgebung auf die Anwendung der definierten Schwachstellen-Workarounds durch das vorgesehene angepasste Deployment getestet werden. Das Testergebnis kann dann an die Build-Pipeline zurückgeliefert werden.

Insgesamt wird die Softwaresicherheit erhöht.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
Fig. 1 zeigt ein Ablaufdiagramm mit Verfahrensschritten für eine erste Ausführungsform eines Verfahrens zum Aktualisieren von Softwarekomponenten;
Fig. 2 zeigt ein Blockdiagramm für Soft- und Hardwarekomponenten und Prozesse, die gemäß einer zweiten Ausführungsform eines Verfahrens zum Aktualisieren von Softwarekomponenten verwendet werden; und
Fig. 3 zeigt ein Ablaufdiagramm mit Verfahrensschritten für die zweite Ausführungsform des Verfahrens zum Aktualisieren von Softwarekomponenten.

In den Figuren sind gleiche oder funktionsgleiche Elemente mit denselben Bezugszeichen versehen worden, sofern nichts anderes angegeben ist.

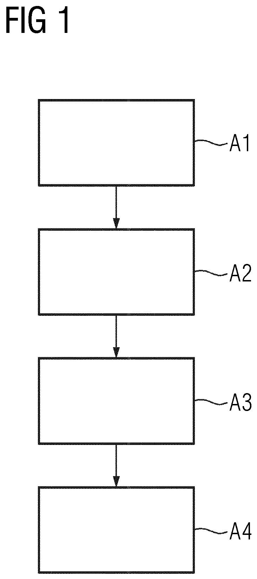

In Fig. 1 ist ein schematisches Ablaufdiagramm für eine Softwareaktualisierung dargestellt. Üblicherweise erfolgt ein Deployment einer neuen Softwarekomponente, also die Aktualisierung der Software, durch ein Kompilieren, Testen und Mergen der Softwarekomponente bzw. Anwendung, wobei Deploymentinformationen berücksichtigt werden. Angaben über Schwachstellen der Softwarekomponente sind in der Deploymentinformation nach dem Stand der Technik nicht enthalten.

Um einen sicheren Betrieb einer Softwarekomponente, beispielsweise in einer Verarbeitungsumgebung eines Automatisierungsnetzwerks zu gewährleisten, wird in einem ersten Schritt A1 eine Deploymentinformation für die Softwarekomponente abgerufen. Die Deploymentinformation enthält dabei Informationen über Programmbestandteile der Softwarekomponente. Falls die Softwarekomponente als Softwarecontainerbild vorliegt, sind die Programmbestandteile beispielsweise Paketinformationen, Binärdateien, Bibliotheken und/oder Konfigurationsdaten. Die Konfigurationsdaten bestimmen zum Beispiel Zugriffsrechte der Softwarekomponente.

Im Folgeschritt A2 wird geprüft, ob mindestens ein Programmbestandteil eine ausnutzbare Schwachstelle aufweist, und dieser Programmbestandteil wird gegebenenfalls identifiziert. Die Prüfung kann anhand der Angaben in den Deploymentinformationen und/oder aus einem Scanergebnis aus einer Durchsuchung des Softwarecontainerbilds, etwas über einen Schwachstellenscanner, abgeleitet werden. Es ist auch denkbar, dass das Vorhandensein der Schwachstelle von einer Schwachstellendatenbank ausgelesen wird.

Falls weder auf Basis des neuen Softwarecontainerbildes und/oder einer Schwachstellendatenbank eine Schwachstelle gefunden wurde, noch kritische Schwachstelleninformationen aus der Deploymentinformation ableitbar sind, wird die Softwarekomponente getestet, der Release in das Repository durchgeführt und der Produktionsumgebung bereitgestellt. Es wird dann direkt der Schritt A4 (vgl. unten) durchgeführt.

Falls eine Schwachstelle gefunden wurde, wird im Schritt A3 eine Laufzeiteinschränkung für den mit einer Schwachstelle identifizierten Programmbestandteil festgelegt. Es wird zum Beispiel eine Parameteraus oder -Übergabe der zu aktualisierenden Softwarekomponente an weitere Softwarekomponenten eingeschränkt, um ungewünschte Funktionsabrufe oder Schnittstellenfreigaben zu unterbinden. Die Laufzeiteinschränkung wird durch eine Laufzeiteinschränkungsinformation beschrieben, die der Deploymentinformation beigefügt wird.

Schließlich erfolgt im Schritt A4 die Durchführung des Deployments der Softwarekomponente, wobei die geänderte bzw. an die erkannte Schwachstellensituation angepasste Deploymentinformation berücksichtigt wird. Die Softwarekomponente unterliegt dann bei ihrer Ausführung der Laufzeiteinschränkung gemäß der Laufzeiteinschränkungsinformation.

Die Schwachstelle wird insofern ausgeschaltet oder deren potentielles Ausnutzungsrisiko reduziert, ohne dass ein erneuter Softwarekomponentenrelease abgewartet werden muss. Das Verfahren mindert insbesondere das Schadrisiko von Zero-Day-Lücken oder Exploits.

Ein Vorteil der vorgeschlagenen Lösungen ist, dass im Vergleich zu üblichen Schwachstellenscannern, die nur Schwachstellen in Container-Images detektieren, innerhalb einer CI/CD-Pipeline die mit dem Image verbundenen Deploymentinformationen überprüft werden. So lassen sich wohldefinierte Maßnahmen zum (temporären) Einschränken einer Schwachstelle umsetzen. Ferner kann anhand der Deploymentinformationen, die Schwachstelleninformationen enthalten können, erkannt werden, wenn bereits Schutzmaßnahmen umgesetzt sind, beispielsweise dass Prozessprivilegien entzogen wurden. Die einer Deploymentinformation angehängte Schwachstelleninformation und/oder Laufzeiteinschränkungsinformation kann auch angeben, ob eine detektierte Schwachstelle überhaupt im Kontext der Softwarekomponente ausnutzbar ist.

Das Verfahren zum sicheren Betrieb von Softwarekomponenten, kann beispielsweise nach einer Softwarekomponentenaktualisierung, die eine Zero-Day-Exploit-Schwachstelle offenbart, einen sicheren Weiterbetreib der Verarbeitungsumgebung ermöglichen. Unter Betrieb wird insbesondere die Ausführung von miteinander zusammenwirkenden Softwarekomponenten in Laufzeitumgebungen verstanden.

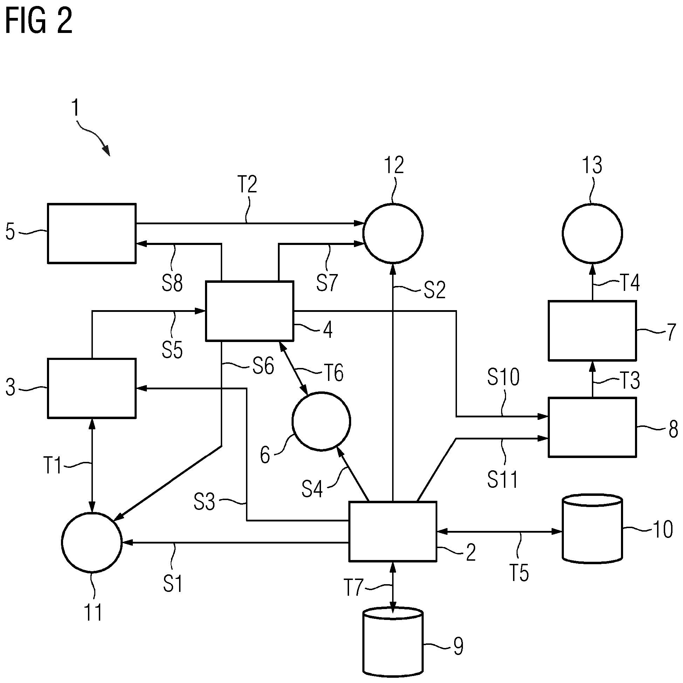

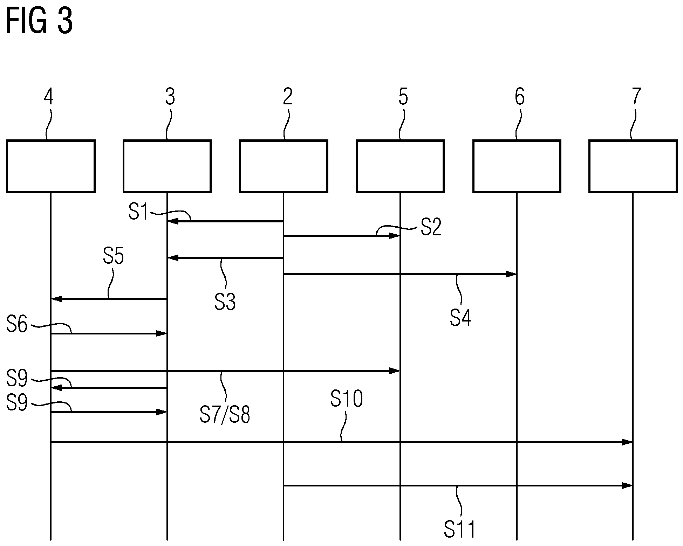

Im Weiteren wird ein zweites Ausführungsbeispiel für ein Verfahren zum Aktualisieren einer Softwarekomponente anhand der Fig. 2 und 3 erläutert. Dabei zeigt die Fig. 1 am Verfahren beteiligte Komponenten und deren Zusammenwirken, und die Fig. 3 ein Kommunikationsdiagramm.

Das zweite Ausführungsbeispiel basiert auf einer CI/CD-Pipeline mit einem Schwachstellenscanner 2, einer Code-Repository 3, einer Build-Pipeline 4, einer Registry 5, einer Merge-Datenbank 6 und einer Laufzeitumgebung 7. Die Fig. 1 zeigt weitere Komponenten des Abarbeitungssystems 1, die als funktionalisierte Hardware oder auch Softwareservices implementiert werden können. Ein Orchestrierer 8 verwaltet T3 die Laufzeitumgebung 7 zur Instantiierung T4 von Softwarecontainern 13. Der Schwachstellenscanner 2 ist kommunikativ mit einer Schwachstellendatenbank 10 und einem Cache 9 gekoppelt. Der Schwachstellenscanner 2 verwendet T5 die Schwachstelleninformationen aus der Schwachstellendatenbank 10 und schreibt und liest T7 seine Scanergebnisse in das bzw. von dem Cache 9.

Die Code-Repository 3 verwaltet T1 Deploymentinformationen 11 und hält diese vor. Die Container-Registry 5 stellt jeweils Softwarecontainerbilder 12 bereit (Schritt T2). In einer Merge-Datenbank 6 sind die von dem Schwachstellenscanner 2 eingetragene Merge-Requests identifiziert und abgelegt, welche von der Build-Pipeline 4 genutzt und ausgewertet T6 werden.

Bei der Aktualisierung eines Softwarecontainerbildes, also dem Release einer neuen Version der zugrunde liegenden Softwarekomponente, können die im weiteren beschriebenen Aspekte und Schritte durchgeführt werden.

Es wird angenommen, dass der Schwachstellenscanner 2 in der Lage ist, auf die zu durchsuchenden oder zu analysierenden Objekte, im betrachten Beispiel Softwarecontainerbilder bzw. Container-Images, darin enthaltene Paketinformationen, Binärdateien, Bibliotheken und Konfigurationsdateien) zuzugreifen. Dies kann direkt (Schritt S2) oder durch Abruf einer Schwachstellendatenbank 10 erfolgen.

Im Schritt S1 kann der Scanprozess der die Deploymentinformationen 11 enthaltene Deployment-Konfiguration Bestandteil der Build-Pipeline 4 sein, alternativ aber auch oder als ausgelagerter Prozess, der regelmäßig durchgeführt wird.

Die in der Deployment-Konfiguration bzw. Information 11 referenzierten Softwarecontainerbilder 12 werden im Schritt S2 vom Scanner 2 in den Registries 5 durchsucht, die in der Deploymeninformation 11 für die zu aktualisierende Softwarekomponente referenziert sind (Schritt S2). Im Scanvorgang werden die innerhalb des Softwarecontainerbildes betriebenen Komponenten bzw. Programmbestandteile durch Zugriff auf den Paketmanager oder durch Abgleich von Binärsignaturen identifiziert. Die gefundenen Komponenten werden mit einer Schwachstellendatenbank 10 abgeglichen wodurch vorhandene bekannte Schwachstellen identifiziert werden können.

Da die gleichen Softwarecontainerbilder, Programmbestandteile oder Binär-Komponenten mehrfach innerhalb eines Deployments durch unterschiedliche Deployment-Konfigurationen referenziert werden können, werden bevorzugt bereits erzeugte Scanergebnisse in dem Cache 9 zwischengespeichert (Schritt T7). Beispielsweise wird für den Scanner 2 in einer Konfigurationsdatei hinterlegt, zu welchem Zeitpunkt ein erneuter Scan des Container-Images durchgeführt werden soll oder wie alt die Liste der verwundbaren Softwarekomponenten sein darf.

In einer CI/CD-Pipeline können Images und Binärdateien durch Übersetzungsvorgänge erstellt werden oder an anderer Stelle erzeugte Komponenten können referenziert werden. Sofern diese lediglich referenziert werden und in anderen Pipelines verwendet werden, kann diese Information in einer Konfigurationsdatei für den Scanner 2 hinterlegt werden. Dabei kann in der Konfigurationsdatei für den Schwachstellenscanprozess bzw. den Scanner 2 auch abgelegt werden, in welcher anderen Pipeline ein Image erzeugt wird. Der Scanner 2 wertet diese Information dann zur jeweiligen Laufzeit aus.

Kann eine Schwachstelle nicht durch ein Software-Update behoben werden, da das Image z.B. nicht in der hinterlegten CI/CD-Pipeline gebaut wird oder da noch kein Patch definiert oder eine den Patch aufweisende aktualisierte Softwarekomponente verfügbar ist, werden die in der Schwachstellendatenbank 10 definierten Übergangslösungen durch den Scanner 2 an die CI/CD-Pipeline zurückgemeldet. Dies geschieht durch eine Merge-Request S3, der in der Merge-Datenbank 6 dokumentiert wird S4. Als Übergangslösung für die jeweilige Schwachstelle ist eine Laufzeiteinschränkung vorgesehen, beispielsweise eine Einschränkung von Privilegien der Softwarekomponente. Laufzeitrestriktionen sind insbesondere das Entziehen von Prozessprivilegien des Laufzeitnutzers mit Hilfe der Zuweisung spezieller, zur Minimierung der Angriffsfläche definierter Seccomp-Profile oder Linux-Capabilities sowie die Zuweisung spezieller Einhängeoptionen für die Instanz eingehängten Dateisysteme.Dies wird durch eine Änderung der Deploymentinformationen erzielt, die im Schritt S6 aktualisiert werden. Die im Schritt S5 durch die Code-Repository gestartete Build-Pipeline 4 passt die Deploymentinformation bzw. Deployment-Konfiguration entsprechend an.

Die Build-Pipeline 4 erzeugt dann im Schritt S7 das Container-Image bzw. das Containerbild 12 der zu aktualisierenden Softwarekomponente, welches von der Registry 5 gespeichert wird S8. Nach dem Testen S9 des der Softwarekomponente kann ein Deployment durchgeführt werden S10.

Zusätzlich kann das Ausnutzen einer Schwachstelle durch die Definition eines angepassten Mandatory-Access-Control-Profils verhindert werden. Eine weitere Möglichkeit ist die Definition entsprechender Konfigurationseinstellungen für die mit dem Deployment eingebrachte Softwarekomponente derart, dass Parameterüberprüfungen für Übergabeparametern sichergestellt werden und entsprechend strukturierte Aufrufe mit Hilfe von regulären Ausdrücken erkannt und blockiert werden.

Die Laufzeiteinschränkung erfolgt, indem ein Merge-Request innerhalb der Pipeline 4 mit den vorgeschlagenen Laufzeitanpassungen eröffnet wird. Laufzeitanpassungen bzw. Laufzeiteinschränkungen können hierbei z.B. das Entziehen bestimmter Rechte sein, die automatisch als Anpassung in der Deployment-Konfiguration 11 vorgeschlagen werden. Die vorgeschlagenen Änderungen können vom Entwickler geprüft werden oder bei der Verwendung automatischer Merges mit Hilfe (halb-) automatischer Unit- und Integrationstests geprüft werden.

Der automatisch generierte Merge-Request, welcher die durchzuführenden Laufzeitrestriktionen zum Verhindern der Ausnutzung der Schwachstelle in der eigenen CI/CD-Pipeline fordert, erweitert die Deployment-Information 11 um die definierten Laufzeitrestriktionen. Der Merge-Request kann entweder automatisch, halbautomatisch (beim erfolgreichen Durchlaufen der Tests) oder manuell durch die Betreiber der CI/CD-Pipeline umgesetzt werden. Es ist auch denkbar, dass diese abhängig von der Kritikalität der detektierten Schwachstelle entweder manuell, mit dem beschrieben halbautomatischen Verfahren oder automatisch umgesetzt wird. Das Verhalten des Systems wird vom Verantwortlichen der CI/CD-Pipeline in einer z.B. in einer Konfigurationsdatei definiert.

Die über den Scanner 2 eingebrachten Deployment-Parameter und Konfigurationsoptionen werden bei einem Merge zur Nachvollziehbarkeit entsprechend markiert und mit der genannten Schwachstelle referenziert. Die Referenz kann durch entsprechende Kommentare in der Merge-History durchgeführt werden.

Ein weiterer Merge-Request wird vom Scanner 2 erst im Schritt S3 erstellt, wenn die Schwachstelle durch Einbringung eines entsprechenden Patches behoben ist und nicht mehr detektiert werden kann. Hierzu wird für den Scanner 2 in einer ausgelagerten Datenbank 6 referenziert, welche Merge-Requests aufgrund einer detektierten Schwachstelle für ein Deployment durchgeführt wurden. Die ID des Merge-Requests mit den hierdurch referenzierten Schwachstellen und der Deployment-

Konfiguration verknüpft. Innerhalb der Pipeline 4 wird bei jedem nachfolgenden Scan überprüft, ob die referenzierte Schwachstelle noch erkannt wird und somit die Bedingungen für die Laufzeiteinschränkungen noch erfüllt sind. Ist dies nicht mehr der Fall, können die Einschränkungen durch Erzeugung eines Undo-Merge-Requests rückgängig gemacht werden.

Sofern der Build-Prozess 4 des Images 12 innerhalb der eigenen CI/CD-Pipeline stattfindet, ist denkbar, dass das Image 12 mit veränderten Compile-Operationen (z.B. Verwenden von Intel CET / Clang CFI, um z.B. ROP-Angriffe zu mitigieren) übersetzt wird.

Des Weiteren ist es möglich, dass eine temporäre Mitigation neue Anforderungen an die darunterliegende Laufzeit-Plattform 7, 8 hat oder die spezielle Hardware-Anforderungen erforderlich sind. In einem orchestrierenden Cluster ist denkbar, dass im Rahmen der Erstellung einer angepassten Deployment-Konfiguration den erzeugten Images oder Deploymentinformationen spezielle Labels zugewiesen werden, sodass in einem orchestrierten Container-Umfeld der Orchestrator 8 automatisch die richtige Zielplattform 7 auswählen kann bzw. überprüfen kann, ob das neu eingebrachte Deployment auf der Plattform überhaupt lauffähig ist.

Sind die temporären Anpassungen der Privilegien und Konfigurationseinstellungen durch die in den Deploymentinformationen enthaltenen Laufzeiteinschränkungsinformation angewendet, werden innerhalb der Build-Pipeline 4 erforderliche Funktionstests (Schritt S9) durchgeführt. Schlagen diese fehl, wird das Entwicklerteam informiert. Es ist möglich, dass durch den Entwickler händisch definiert wird, dass zur Aufrechterhaltung der Funktionsfähigkeit der in der CI/CD-Pipeline verwalteten Applikation auch bestimmte, identifizierte Schwachstellen (z.B. durch Referenzierung mit CVE-Nummern oder durch Zeitbeschränkung) nicht durch Privilegienanpassung behoben werden sollen.

Um auszuschließen, dass die Ausnutzung von Schwachstellen auf der Produktionsumgebung erfolgen, können vom Scanner 2 die verwendeten Deployment-Konfigurationen auf der Produktionsumgebung abgeglichen werden (Schritt S11). Die Deployment-Konfigurationen können vom Scanner 2 entweder beim Orchestrierer 8 abgefragt werden oder durch direkten Zugriff auf die Laufzeitumgebung 7 ermittelt werden. Werden Abweichungen zum Deployment in der CI/CD-Pipeline festgestellt, können ebenfalls Abweichungen z.B. über entsprechende Warnungen bzw. Incidents oder Issues an die CI/CD-Pipeline gemeldet werden. Auch dann kann der Scan-Vorgang sowohl im Rahmen des Build-Prozesses 4 innerhalb der Pipeline ausgeführt werden oder als periodischer Scan.

Sobald ein Image bzw. die in der Pipeline verwendete Softwarekomponente keine Schwachstelle mehr aufweist, können die vom Scanner 2 eingebrachten Konfigurationsänderungen in Abhängigkeit von der in der CI/CD-Pipeline gewählten Konfiguration automatisch oder manuell rückgängig gemacht werden, denn die vom Scanner eingebrachten Änderungen wurden mit den entsprechenden Schwachstellen referenziert.

Durch die Nutzung von Deployment-Konfigurationsdaten wird eine Schwachstelle automatisch neutralisiert, bis ein Patch für die betroffene Softwarekomponente verfügbar ist.

Obwohl die vorliegende Erfindung anhand von Ausführungsbeispielen beschrieben wurde, ist sie vielfältig modifizierbar. Obwohl die Beispiele anhand von Softwarecontainern erläutert wurden, können auch anders implementierte Softwarekomponenten gemäß dem Verfahren aktualisiert werden. Obwohl formuliert ist, dass Schwachstellenscanner Softwareimages durchsuchen, ist damit auch gemeint, dass der Schwachstellenscanner Schwachstelleninformationen zu dem Softwareimage in einer Schwachstellendatenbank abruft.

## Patentansprüche

1. Verfahren zum sicheren Betrieb einer Softwarekomponente mit den Schritten:
Abrufen (A1) einer Deploymentinformation für die Softwarekomponente, wobei die Deploymentinformation (11) Informationen über Programmbestandteile der Softwarekomponente und deren Laufzeitkonfiguration umfasst;
Prüfen (A2), ob mindestens ein Programmbestandteil eine Schwachstelle aufweist und Identifizieren des Programmbestandteils;
Bestimmen (A3) einer Laufzeiteinschränkung für den mit einer Schwachstelle identifizierten Programmbestandteil;
Einfügen (S6) einer Laufzeiteinschränkungsinformation in die Deploymentinformation (11) für die Softwarekomponente; und
Durchführen (A4) des Deployments der Softwarekomponente in Abhängigkeit von der Deploymentinformation (11), wobei die Softwarekomponente bei ihrer Ausführung der Laufzeiteinschränkung gemäß der Laufzeiteinschränkungsinformation unterliegt.

2. Verfahren nach Anspruch 1,
**dadurch gekennzeichnet,**
**dass** die Softwarekomponente als Instanz eines Softwarecontainers (13) implementiert ist und ein zugehöriges Softwarecontainerbild (12) Paketinformationen, Binärdateien, Bibliotheken und Konfigurationsdaten als Programmbestandteile umfasst.

3. Verfahren nach Anspruch 2,
**dadurch gekennzeichnet,**
**dass** das Deployment die Erstellung (S7, S8) eines angepassten Softwarecontainerbildes (12) für die Softwarekomponente nach Maßgabe der um die Laufzeiteinschränkung ergänzten Deploymentinformation (11) umfasst.

4. Verfahren nach Anspruch 3,
**dadurch gekennzeichnet,**
**dass** vor dem Deployment (A4, S10) eine Funktionsprüfung (S9) des angepassten Softwarecontainerbildes (11) in einer gesicherten Abarbeitungsumgebung (3) erfolgt.

5. Verfahren nach einem der Ansprüche 1 - 4,
**dadurch gekennzeichnet,**
**dass** das Deployment (A4, S10) der Softwarekomponente in eine Laufzeitumgebung (7, 8) erfolgt.

6. Verfahren nach einem der Ansprüche 1 - 5,
**dadurch gekennzeichnet,**
**dass** die Deploymentinformation (11) ein oder mehrere Softwarecontainerbild(er) (12) referenziert.

7. Verfahren nach einem der Ansprüche 1 - 6,
**dadurch gekennzeichnet,**
**dass** das Einfügen (S6) einer Laufzeiteinschränkungsinformation über einen Merge-Request (S3, S4) für eine Build-Pipeline (4), welche die Aktualisierung der Softwarekomponente veranlasst, erfolgt.

8. Verfahren nach einem der Ansprüche 1 - 7,
**dadurch gekennzeichnet,**
**dass** das Prüfen (A2), ob mindestens ein Programmbestandteil eine Schwachstelle aufweist, ein Durchsuchen (S1) der Deploymentinformation (11) und/oder einen Scan (S2) des Softwarecontainerbildes (12) umfasst.

9. Verfahren nach einem der Ansprüche 1 - 8,
**dadurch gekennzeichnet,**
**dass** die Laufzeiteinschränkung eine Zugriffsrechteeinschränkung und/oder die Beschränkung der Ausgabe von Übergabeparameter an andere Softwarekomponenten oder Funktionsaufrufe umfasst.

10. Verfahren nach einem der Ansprüche 1 - 9, ferner umfassend:
Ergänzen (S3) der Deploymentinformation (11) um eine Schwachstelleninformation, welche der identifizierten Softwarekomponente und/oder dem mit der Schwachstelle identifizierten Programmbestandteil zugeordnet wird, wobei die Schwachstelleninformation insbesondere das Vorliegen einer Schwachstelle und/oder eine Behebung der Schwachstelle durch die Laufzeiteinschränkung umfasst, und/oder
Speichern der Schwachstelleninformation, welche der identifizierten Softwarekomponente und/oder dem mit der Schwachstelle identifizierten Programmbestandteil zugeordnet ist, in einer Schwachstellendatenbank (10).

11. Verfahren nach einem der Ansprüche 1 - 10, ferner umfassend:
Durchsuchen (S1) der Deploymentinformation für die Softwarekomponente nach einer Schwachstelleninformation, welche der Softwarekomponente und/oder dem identifizierten Programmbestandteil zugewiesen ist; und
Durchführen des Deployments (S10, S11) der Softwarekomponente in Abhängigkeit von der Schwachstelleninformation.

12. Verfahren nach Anspruch 10 oder 11,
**dadurch gekennzeichnet,**
**dass** das Prüfen (A2), ob mindestens ein Programmbestandteil eine Schwachstelle aufweist, ferner umfasst:
Speichern der Schwachstelleninformation als Konfigurationsdaten in einer Schwachstellendatenbank (10) für einen Schwachstellenscanprozess.

13. Verfahren nach einem der Ansprüche 1 - 12,
**dadurch gekennzeichnet,**
**dass** eine Schwachstelle eine Übergabemöglichkeit von ungeprüften Parametern und/oder einen Funktionsaufruf durch die Softwarekomponente umfasst.

14. Verfahren zum Betreiben eines Abarbeitungssystems (1), welches zur Bereitstellung einer oder mehrerer Softwarefunktionen eingerichtet ist, wobei mehrere zusammenwirkende Softwarekomponenten in Laufzeitumgebungen (7) durchgeführt werden, umfassend:
Betreiben einer der Softwarekomponenten gemäß einem Verfahren nach einem der Ansprüche 1 - 13.

15. Computerprogrammprodukt, umfassend Befehle, die bei der Ausführung des Programms durch einen oder mehrere Computer diese/n veranlassen, das Verfahren nach einem der Ansprüche 1 - 14 auszuführen.

## Claims

1. Method for securely operating a software component, having the following steps:
retrieving (A1) deployment information for the software component, wherein the deployment information (11) includes information about program components of the software component and the runtime configuration thereof;
checking (A2) whether at least one program component has a vulnerability and identifying the program component;
determining (A3) a runtime restriction for the program component identified as having a vulnerability;
inserting (S6) runtime restriction information into the deployment information (11) for the software component; and
implementing (A4) the deployment of the software component on the basis of the deployment information (11), wherein, on being executed, the software component is subject to the runtime restriction in accordance with the runtime restriction information.

2. Method according to Claim 1,
**characterized**
**in that** the software component is implemented as an instance of a software container (13) and an associated software container image (12) comprises package information, binaries, libraries and configuration data as program components.

3. Method according to Claim 2,
**characterized**
**in that** the deployment comprises the creation (S7, S8) of a modified software container image (12) for the software component in accordance with the deployment information (11) supplemented by the runtime restriction.

4. Method according to Claim 3,
**characterized**
**in that**, before deployment (A4, S10), a functional test (S9) of the modified software container image (11) is carried out in a secure processing environment (3).

5. Method according to any one of Claims 1 - 4,
**characterized**
**in that** the software component is deployed (A4, S10) in a runtime environment (7, 8).

6. Method according to any one of Claims 1 - 5,
**characterized**
**in that** the deployment information (11) references one or more software container image(s) (12).

7. Method according to any one of Claims 1 - 6,
**characterized**
**in that** the insertion (S6) of runtime restriction information is carried out via a merge request (S3, S4) for a build pipeline (4) that causes the software component to be updated.

8. Method according to any one of Claims 1 - 7,
**characterized**
**in that** the checking (A2) of whether at least one program component has a vulnerability comprises a search (S1) of the deployment information (11) and/or a scan (S2) of the software container image (12).

9. Method according to any one of Claims 1 - 8,
**characterized**
**in that** the runtime restriction comprises an access rights restriction and/or the limitation of the output of passed-in parameters to other software components or function calls.

10. Method according to any one of Claims 1 - 9, further comprising:
extending (S3) the deployment information (11) to include vulnerability information which is assigned to the identified software component and/or the program component identified as having the vulnerability, wherein the vulnerability information in particular includes the presence of a vulnerability and/or a correction of the vulnerability by means of the runtime restriction, and/or
storing the vulnerability information, which is assigned to the identified software component and/or to the program component identified as having the vulnerability, in a vulnerability database (10).

11. Method according to any one of Claims 1 - 10, further comprising:
searching (S1) the deployment information for the software component for vulnerability information that is assigned to the software component and/or the identified program component; and
implementing the deployment (S10, S11) of the software component on the basis of the vulnerability information.

12. Method according to Claim 10 or 11,
**characterized**
**in that** the checking (A2) of whether at least one program component has a vulnerability further comprises:
storing the vulnerability information as configuration data in a vulnerability database (10) for a vulnerability scanning process.

13. Method according to any one of Claims 1 - 12,
**characterized**
**in that** a vulnerability involves a possibility of passing unchecked parameters and/or a function call by the software component.

14. Method for operating a processing system (1) which is configured for providing one or more software functions, wherein a plurality of cooperating software components are implemented in runtime environments (7), comprising:
operating one of the software components according to a method according to any one of Claims 1 - 13.

15. Computer program product, comprising commands which, during the execution of the program by one or more computers, cause said computer(s) to carry out the method according to any one of Claims 1 - 14.

## Revendications

1. Procédé de fonctionnement sécurisé d'un composant logiciel, comprenant les étapes de :
récupération (A1) d'informations de déploiement du composant logiciel, les informations de déploiement (11) comprenant des informations sur des composants de programme du composant logiciel et leur configuration de durée de fonctionnement ;
vérification (A2) quant à savoir si un composant de programme présente une faille et identification du composant de programme ;
estimation (A3) d'une limitation de temps de fonctionnement pour le composant de programme identifié comme comportant une faille ;
introduction (S6) d'informations de limitation de temps de fonctionnement dans les informations de déploiement (11) pour le composant logiciel ; et
réalisation (A4) du déploiement du composant logiciel en fonction des informations de déploiement (11), le composant logiciel étant soumis lors de son exécution à la limitation de temps de fonctionnement selon les informations de limitation de temps de fonctionnement.

2. Procédé selon la revendication 1, **caractérisé en ce que** le composant logiciel est mis en œuvre en tant qu'instance d'un conteneur de logiciels (13) et une image de conteneur de logiciels (12) respective comprend comme composants de programme, des informations de paquets, des données binaires, des bibliothèques et des données de configuration.

3. Procédé selon la revendication 2, **caractérisé en ce que** le déploiement comprend la création (S7, S8) d'une image de conteneur de logiciel (12) adaptée au composant logiciel sur mesure des informations de déploiement (11) complétées de la limitation de durée de fonctionnement.

4. Procédé selon la revendication 3, **caractérisé en ce qu'**avant le déploiement (A4, S10) a lieu un test de fonctionnement (S9) de l'image de conteneur de logiciel (12) dans un environnement de traitement sécurisé (3).

5. Procédé selon l'une des revendications 1 - 4, **caractérisé en ce que** le déploiement (A4, S10) du composant logiciel a lieu dans un environnement de fonctionnement (7, 8).

6. Procédé selon l'une des revendications 1 - 5, **caractérisé en ce que** les informations de déploiement (11) référencent une ou plusieurs image(s) de conteneur de logiciel (12).

7. Procédé selon l'une des revendications 1 - 6, **caractérisé en ce que** l'introduction (S6) des informations de limitation de durée de fonctionnement se fait via une demande de fusion (S3, S4) pour un pipeline de build (4) qui autorise la mise à jour du composant logiciel.

8. Procédé selon l'une des revendications 1 - 7, **caractérisé en ce que** la vérification (A2) quant à savoir si au moins un composant de programme présente une faille comprend un examen (S1) des informations de déploiement (11) et/ou un balayage (S2) de l'image de container de logiciel (12).

9. Procédé selon l'une des revendications 1 - 8, **caractérisé en ce que** la limitation de durée de fonctionnement comprend une limitation de droits d'accès et/ou la limitation de la délivrance de paramètres de transfert à d'autres composants logiciels ou d'autres appels de fonction.

10. Procédé selon l'une des revendications 1 - 9, comprenant en outre :
l'ajout (S3) aux informations de déploiement (11) d'informations de faille assignées au composant logiciel identifié et/ou au composant de programme identifié comme comportant une faille, les informations de faille comprenant en particulier la présence d'une faille et/ou l'élimination de la faille par la limitation de durée de fonctionnement, et/ou
l'enregistrement des informations de faille assignées au composant logiciel identifié et/ou au composant de programme identifié comme comportant une faille dans une banque de données de failles (10).

11. Procédé selon l'une des revendications 1 - 10, comprenant en outre :
l'examen (S1) des informations de déploiement pour le composant logiciel à la recherche d'informations de faille assignées au composant logiciel et/ou au composant de programme identifié ; et
la réalisation du déploiement (S10, S11) du composant logiciel en fonction des informations de faille.

12. Procédé selon l'une des revendications 10 ou 11, **caractérisé en ce que** la vérification (A2) quant à savoir si au moins un composant de programme présente une faille comprend en outre :
l'enregistrement des informations de faille en tant que données de configuration dans une banque de données de faille (10) pour un procédé de balayage de failles.

13. Procédé selon l'une des revendications 1 - 12, **caractérisé en ce qu'**une faille comprend une possibilité de transfert de paramètres non vérifiés et/ou un appel de fonction par le composant logiciel.

14. Procédé de fonctionnement d'un système de traitement (1) conçu pour préparer une ou plusieurs fonction(s) logicielle(s), où plusieurs composants logiciels en collaboration sont réalisés dans des environnements de fonctionnement (7), comprenant de :
Faire fonctionner l'un des composants logiciels selon un procédé selon l'une des revendications 1 - 13.

15. Produit de programme informatique comprenant des commandes qui, lors de l'exécution du programme par un ou plusieurs ordinateurs, l'amènent à réaliser le procédé selon l'une des revendications 1 - 14.
